# NOUVEAU FASCICULE DE BREVET EUROPEEN

(11) **EP 2 358 546 B2**
(45) Date de publication et mention de la décision concernant l'opposition: **15.08.2018**
(45) Mention de la délivrance du brevet: 20.08.2014
(21) Numéro de dépôt: 09744630.6
(22) Date de dépôt: 26.10.2009
(51) Int. Cl.: B60B 21/02, B60B 21/04, B60B 21/06, B21D 53/30, B60B 25/00, C22C 21/12

(54) **JANTE DE ROUE POUR CYCLE ET PROCÉDÉ DE FABRICATION**
FELGE FÜR ZWEIRAD UND FERTIGUNGSVERFAHREN
WHEEL RIM FOR CYCLE AND PRODUCTION METHOD

(30) Priorité: 21.11.2008 FR 0806539
(43) Date de publication de la demande: 24.08.2011
(73) Titulaire: Constellium Issoire, 63500 Issoire (FR)
(72) Inventeur: PIGNATEL, Jérôme, 44240 La Chapelle sur Erdre (FR)
(74) Mandataire: Constellium - Propriété Industrielle
(86) Numéro de dépôt international: PCT/EP2009/007640
(87) Numéro de publication internationale: WO 2010/057562

(56) Documents cités:
- EP-A- 0 154 666
- EP-A- 1 260 382
- EP-B1- 0 261 969
- WO-A-2006/137637
- DE-A1-102007 018 459
- DE-U1- 20 022 850
- FR-A- 2 894 985
- FR-A- 2 900 160
- US-B1- 6 186 598

## Description

### Domaine de l'invention

L'invention se rapporte au domaine des profilés en aluminium et plus particulièrement au profilé creux notamment pour la fabrication de jantes de vélo.

### Etat de la technique

Les profilés creux en aluminium sont des produits corroyés, généralement filés, de section transversale uniforme sur toute leur longueur et dont la section transversale comprend au moins un trou intérieur. Les profilés pleins en revanche ont une section ne présentant aucun trou intérieur.

La fabrication des profilés creux en alliage d'aluminium par filage est connue de l'homme du métier. Pour les formes les plus simples, on peut effectuer le filage sur aiguille ou sur nez d'aiguille d'une billette creuse. Cependant, en général, et de toute façon pour les formes ne présentant pas de symétrie d'axe, on effectue le filage en utilisant des filières à pont pour obtenir des profilés creux. Ces techniques de filage sont en général utilisées pour des alliages tels que le 6060, 6061, 6106 ou le 6005 et peuvent s'avérer délicates de mise en oeuvre pour des alliages plus durs, typiquement les alliages d'aluminium dont la limite d'élasticité à 0.2% d'allongement est supérieure à 350 MPa. En particulier la réalisation de profilés creux dont les parois intérieures ont des épaisseurs faibles, typiquement de l'ordre du mm, s'avère délicate pour ces alliages durs. De même la durée de vie des outillages utilisés est faible pour la réalisation de profilés creux monoblocs en alliage dur.

Les profilés creux en aluminium sont notamment utiles pour la fabrication de jantes pour roues de vélo.

Une roue de vélo comprend généralement un moyeu central relié à une jante circulaire par des rayons. La jante peut être formée d'un profilé en alliage d'aluminium comportant deux ponts circulaires coaxiaux reliés par deux flancs latéraux de façon à former un caisson.

Les flancs latéraux se prolongent radialement vers l'extérieur par deux ailes, de façon à former avec le pont extérieur une gorge annulaire prévu pour recevoir un pneumatique. Pour certaines jantes qui sont prévues pour recevoir un boyau, la gorge est une simple rainure formée par un affaissement du pont extérieur radialement vers l'intérieur.

Les rayons sont reliés à la jante par des écrous vissés à l'extrémité des rayons. Ces écrous permettent par ailleurs de régler la tension des rayons. Pour recevoir les écrous de rayons, de façon usuelle, les deux ponts de la jante sont habituellement percés d'orifices répartis à la circonférence de la jante. Les orifices du pont intérieur sont prévus pour servir d'assise aux têtes d'écrous. Les orifices du pont extérieur, de diamètre extérieur, sont prévus pour permettre la mise en place de l'écrou de rayon depuis l'extérieur et/ou pour renforcer la fixation des rayons. Il est aussi possible de ne percer que le pont intérieur et d'éviter le perçage du pont extérieur de manière à obtenir un pont extérieur parfaitement étanche au gaz, cependant cette configuration nécessite une épaisseur importante du pont intérieur pour qu'il ait une rigidité suffisante.

Les jantes doivent combiner deux caractéristiques qui s'avèrent souvent antinomiques : la légèreté, de façon à améliorer le confort des utilisateurs, et la résistance mécanique de façon assurer la sécurité et la durée de vie des produits. Dans l'art antérieur des étapes supplémentaires au procédé de fabrication des jantes ont été proposées pour concilier ces caractéristiques antinomiques.

La demande de brevet FR 2 727 355 A1 décrit un procédé de fabrication d'une jante pour cycle consistant à cintrer un profilé creux dans lequel dans une étape complémentaire il est réalisé un usinage chimique qui consiste à procéder à l'enlèvement de métal par dissolution dans un bain chimique agressif de manière à diminuer l'épaisseur des parois et le poids de la jante. Cette étape d'usinage chimique peut s'avérer de mise en oeuvre délicate et résulte en une perte de métal.

La demande de brevet FR 2 897 013 A1 décrit un procédé de fabrication d'une jante de vélo en alliage d'aluminium comportant un profilé creux comportant un pont inférieur percé par des orifices de rayonnage dans lequel une étape de déformation à froid dans le voisinage des orifices de rayonnage permet d'augmenter localement la dureté de l'aluminium. L'augmentation de dureté par écrouissage reste cependant très limitée.

La demande de brevet WO-A-2006/137637 a trait à un conduit de couleur polyvalent réalisé en aluminium destiné à être utilisé comme chemin de câbles, chemin de roulement et conduit. Le conduit comporte un couvercle supérieur présentant une structure en « D » et un corps inférieur présentant une structure en « D » correspondant au couvercle supérieur et jointe par clipsage.

La présente invention veut résoudre le problème évoqué ci-dessus de fabrication de profilés creux en alliage dur, et, en particulier améliorer la réalisation des profilés creux destinés à la fabrication de jantes de vélo.

### Description des figures

La figure 1 illustre un profilé utile pour la fabrication d'une jante de roue pour cycle selon l'invention.
La figure 2 illustre le second profilé utilisé pour réaliser le profilé utile pour la fabrication d'une jante de roue pour cycle selon l'invention de la figure 1
La figure 3 illustre le premier profilé utilisé réaliser le profilé utile pour la fabrication d'une jante de roue pour cycle selon l'invention de la figure 1.

### Objets de l'invention

Un premier objet de l'invention est une jante de roue pour cycle comprenant un profilé creux présentant en section transversale deux ailes latérales (3,4) formant les deux flancs latéraux dudit profilé, réunies à leur base par un pont inférieur (5) et dans leur partie médiane par un pont supérieur (6) de façon à produire vers le sommet des ailes une gorge caractérisée en ce que ledit profilé creux est formé par assemblage d'au moins un premier profilé plein (1) en alliage d'aluminium avec au moins un second profilé plein (2) en alliage d'aluminium, l'assemblage est obtenu par soudage, lesdits premier et second profilés sont obtenus par filage, ledit pont supérieur (6) fait partie dudit premier profilé plein et ledit pont inférieur (5) fait partie dudit second profilé plein et lesdits premier et second profilés sont en alliage d'aluminium de la série 2xxx, 6xxx ou 7xxx et ont chacun une limite d'élasticité d'au moins 350 MPa et de préférence d'au moins 400 MPa, ledit profilé creux ayant été cintré avant ou après assemblage.

Un autre objet de l'invention est une roue de vélo comportant un moyeu, une jante selon l'invention et des rayons tendus entre le moyeu et la jante.

Encore un autre objet de l'invention est un procédé de fabrication d'une jante de roue pour cycle selon l'invention dans lequel :
(i) on approvisionne au moins un premier profilé plein (1) en alliage d'aluminium de la série 2xxx, 6xxx ou 7xxx et au moins un second profilé plein (2) en alliage d'aluminium de la série 2xxx, 6xxx ou 7xxx, lesdits premier et second profilés étant obtenus par filage et ayant chacun une limite d'élasticité d'au moins 350 MPa et de préférence d'au moins 400 MPa;
(ii) chaque profilé plein est cintré
(iii) on assemble lesdits profilés plein par soudage de manière à former un profilé creux

### Description détaillée de l'invention

Sauf mention contraire, toutes les indications concernant la composition chimique des alliages sont exprimées comme un pourcentage en poids basé sur le poids total de l'alliage. La désignation des alliages se fait en conformité avec les règlements de The Aluminium Association, connus de l'homme du métier. Les définitions des états métallurgiques sont indiquées dans la norme européenne EN 515.

Sauf mention contraire, les caractéristiques mécaniques statiques, en d'autres termes la résistance à la rupture Rₘ, la limite d'élasticité conventionnelle à 0,2% d'allongement R_{p0,2} (« limite d'élasticité ») et l'allongement à la rupture A%, sont déterminées par un essai de traction selon la norme EN 10002-1, le prélèvement et le sens de l'essai étant définis par la norme EN 485-1.

Sauf mention contraire, les définitions de la norme EN 12258 s'appliquent. L'épaisseur des profilés pleins est définie selon la norme EN 2066 :2001 : la section transversale est divisée en rectangles élémentaires de dimensions A et B ; A étant toujours la plus grande dimension du rectangle élémentaire et B pouvant être considéré comme l'épaisseur du rectangle élémentaire.

Un profilé creux est formé par soudage d'au moins un premier profilé plein (1) en alliage d'aluminium de la série 2xxx, 6xxx ou 7xxx avec au moins un second profilé plein (2) en alliage d'aluminium de la série 2xxx, 6xxx ou 7xxx, lesdits premier et second profilés étant obtenus par filage et ayant chacun une limite d'élasticité d'au moins 350 MPa et de préférence d'au moins 400 MPa. L'obtention d'un profilé creux monobloc de géométrie identique par filage sur aiguille ou filage avec une filière à pont serait très difficile.

L'avantage du procédé selon l'invention est de permettre l'obtention jantes de roue pour cycle comprenant des profilés en alliages durs de formes qui auraient été très difficile à obtenir avec une filière à pont, en raison de leur forme, de leur épaisseur et de la nature de l'alliage à filer. En effet, lorsque le métal doit s'écouler le long des canaux d'alimentation d'une filière à pont, il subit des contraintes de cisaillement intenses liées à la proximité des parois desdits canaux d'alimentation. L'énergie mécanique nécessaire pour vaincre ces cisaillements et rendre l'écoulement du métal possible se transforme en grande partie en échauffement, de sorte que, localement, le métal en sortie de filière peut atteindre rapidement une température dangereuse, par exemple vis-à-vis des risques de brûlure. De plus, l'outillage à pont, en particulier les aiguilles qui forment le « cache » permettant d'obtenir la cavité du profilé creux, sont par nature très fragiles car elles subissent des contraintes très élevées du fait du frottement du métal sur leurs flancs et, en raison de la difficulté de leur refroidissement, elles s'échauffent progressivement et se déforment par fluage. Avec le procédé permettant d'obtenir le profilé utilisé pour les jantes de roue pour cycle selon l'invention, on s'affranchit des contraintes liées à l'emploi de filière à pont : on peut filer plus vite des profilés ayant des épaisseurs plus faibles tout en contrôlant beaucoup plus facilement le régime thermique du métal filé.

L'invention est particulièrement avantageuse pour les jantes de roue pour cycle comprenant des profilés creux dans lesquels au moins un des profilés pleins a localement une épaisseur inférieure à 2 mm et de préférence inférieure à 1 mm, c'est-à-dire un profilé plein dont l'épaisseur B d'au moins un rectangle élémentaire est inférieure à 2 mm et de préférence inférieure à 1 mm. La zone de faible épaisseur fait de préférence partie des parois du caisson périphérique formé par l'assemblage des profilés pleins. Il n'est plus nécessaire pour obtenir ces profilés de réaliser des étapes d'usinage mécanique ou chimique comme selon l'art antérieur.

Une jante de roue pour cycle selon l'invention comprend un profilé creux présentant en section transversale deux ailes latérales (3,4) formant les deux flancs latéraux dudit profilé, réunies à leur base par un pont inférieur (5) et dans leur partie médiane par un pont supérieur (6) de façon à produire vers le sommet des ailes une gorge caractérisé en ce que ledit pont supérieur fait partie dudit premier profilé plein et ledit pont inférieur fait partie dudit second profilé plein.

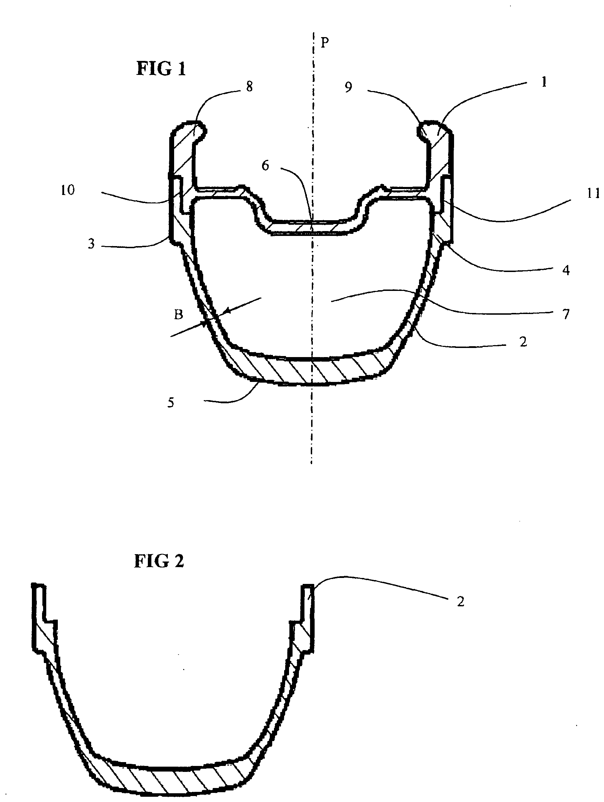

Un exemple avantageux de profilé creux de ce premier mode de réalisation est illustré par la figure 1.

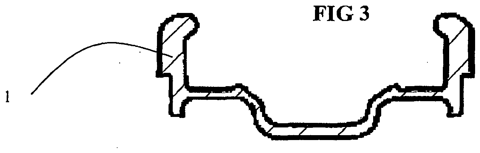

Le profilé creux de ce mode de réalisation est de plan général de symétrie (P) et présente une section ayant la forme générale d'un U ouvert vers la périphérie extérieure. Le profilé creux est formé par assemblage d'un premier profilé plein (1) illustré par la figure 3 et d'un second profilé plein (2) illustré par la figure 2. Le profilé possède deux ailes (3, 4) latérales avantageusement symétriques par rapport au plan (P) reliées par deux ponts transversaux (5, 6) espacés l'un de l'autre: un pont inférieur (5) provenant du second profilé et un pont supérieur (6) provenant du premier profilé, les deux ponts (5, 6) étant de préférence légèrement courbes et formant avec des ailes latérales (3, 4) un caisson périphérique (7) destiné notamment à assurer la tenue mécanique et la rigidité du profilé creux ainsi formé.

L'épaisseur minimale B est typiquement inférieure à 1mm, par exemple de l'ordre de 0,75 mm.

Par ailleurs, avantageusement, l'extrémité de chacune des ailes (3, 4) comprend une saillie locale (8, 9) destinée en particulier à retenir un pneu quand ce profilé est utilisé en tant que jante de roue de vélo.

Lesdits profilés pleins sont en alliage d'aluminium de la série 2xxx, 6xxx ou 7xxx.

D'une manière préférée, au moins profilé plein est en alliage d'aluminium sélectionné dans le groupe constitué des alliages 6082, 6056, 6013, 7108, 7020,7022, 7075, 7349, 7449, 2017, 2014, 2196 et 2195.

Lesdits premier profilé plein et second profilé plein sont en alliage d'aluminium de la série 2xxx, 6xxx ou 7xxx. et préférentiellement sont sélectionnés dans le groupe constitué des alliages 6082, 6056, 6013, 7108, 7020,7022, 7075, 7349, 7449, 2017, 2014, 2196 et 2195. Les alliages 7108, 7020,7022, 7075, 7349, 7449 présentent en particulier l'avantage d'une dureté élevée. Les alliages 2195 et 2196 qui contiennent du lithium présentent en particulier l'avantage d'une faible densité.

L'alliage 6056 est préféré pour la réalisation des profilés pleins selon l'invention car il présente un bon compromis entre l'ensemble des propriétés recherchées : aptitude au filage, dureté et résistance à la corrosion.

Dans un mode de réalisation avantageux de l'invention le premier profilé plein est en un premier alliage d'aluminium et le second profilé plein est en un second alliage d'aluminium différent du premier alliage. Avantageusement le premier alliage est sélectionné dans le groupe constitué des alliages 6082, 6056, 6013, 2017, 2014, 2196 et 2195 et le second alliage est sélectionné dans le groupe constitué des alliages 7108, 7020,7022, 7075, 7349, 7449.

Les premier et second profilés sont assemblés par soudage.

Dans un mode de réalisation préféré illustré par la figure 1, le contact entre les profilés est typiquement réalisé sur des zones de forme plate (10, 11).

Ce mode de réalisation permet d'atteindre une résistance mécanique de l'assemblage supérieure à celle obtenue par simple clipsage. De façon avantageuse, le soudage est effectué par soudage par friction malaxage, soudage laser ou soudage à l'arc.

Les profilés creux selon le premier mode de réalisation sont utilisés pour la fabrication de jantes de roue pour cycle les profilés ayant été cintrés avant ou après assemblage. Dans ce mode de réalisation, le pont inférieur du profilé creux devient le pont intérieur de la jante et le pont supérieur du profilé creux devient le pont extérieur de la jante. Le premier profilé et le second profilé peuvent être cintrés après assemblage. Ce mode de réalisation présente l'avantage de permettre une substitution directe des profilés actuellement utilisés avec les procédés existants : le profilé creux selon l'invention pouvant être directement substitué aux profilés creux monoblocs selon l'art antérieur. Dans certains cas, cependant les présents inventeurs ont constaté que le cintrage du profilé assemblé pouvait fragiliser la zone d'assemblage. Une solution qui peut être avantageuse est de déplacer la zone de soudure de telle sorte qu'elle se trouve plus prêt de la fibre neutre lors du cintrage, de façon à minimiser les sollicitations mécaniques sur ladite zone lors du cintrage.

Dans un autre mode de réalisation permettant une seconde solution pour résoudre ce problème quand il se produit, le premier et le second profilé sont cintrés dans une première étape puis assemblés dans une seconde étape.

En particulier les profilés creux étant utilisés pour la fabrication de jantes de roue, il est avantageux d'utiliser un second profilé plein en alliage plus dur que celui du premier profilé plein et de préférence ayant une limite d'élasticité d'au moins 400 MPa et préférentiellement d'au moins 450 MPa.. En effet, le second profilé plein comprend le pont intérieur de la jante qui doit être percé pour la fixation des rayons ; l'utilisation d'un alliage dur permet d'obtenir une fixation satisfaisante sans devoir percer également le pont extérieur. Ainsi, il n'est plus nécessaire de réaliser une étape de déformation à froid au voisinage du trou de manière à augmenter localement la dureté de l'aluminium comme dans l'art antérieur. Un alliage de la famille 7xxx tel que 7108, 7020,7022, 7075, 7349, 7449 peut avantageusement être utilisé pour la réalisation du second profilé tandis qu'un alliage de la famille 2xxx ou 6xxx tel que 6082, 6056, 6013, 2017, 2014, 2196 et 2195 est avantageux pour la réalisation du premier profilé. Dans un tel cas, il est préférable de cintrer chaque profilé séparément et de les assembler ensuite.

De façon connue, on assemble bout à bout les deux extrémités après cintrage de façon à former une roue, typiquement par soudage.

Une roue de vélo comportant un moyeu, une jante selon l'invention et des rayons tendus entre le moyeu et la jante, présente des caractéristiques améliorées en termes de légèreté et de résistance mécanique.

L'invention concerne également le procédé de fabrication des profilés selon l'invention dans lequel :
(i) on approvisionne au moins un premier profilé plein (1) en alliage d'aluminium de la série 2xxx, 6xxx ou 7xxx et au moins un second profilé plein (2) en alliage d'aluminium de la série 2xxx, 6xxx ou 7xxx, lesdits premier et second profilés étant obtenus par filage et ayant chacun une limite d'élasticité d'au moins 350 MPa et de préférence d'au moins 400 MPa;
(ii) chaque profilé plein est cintré
(iii) on assemble lesdits profilés plein par soudage de manière à former un profilé creux.

## Revendications

1. Jante de roue pour cycle comprenant un profilé creux présentant en section transversale deux ailes latérales (3,4) formant les deux flancs latéraux dudit profilé, réunies à leur base par un pont inférieur (5) et dans leur partie médiane par un pont supérieur (6) de façon à produire vers le sommet des ailes une gorge **caractérisée en ce que** ledit profilé creux est formé par assemblage d'au moins un premier profilé plein (1) en alliage d'aluminium avec au moins un second profilé plein (2) en alliage d'aluminium, l'assemblage est obtenu par soudage, lesdits premier et second profilés sont obtenus par filage, ledit pont supérieur (6) fait partie dudit premier profilé plein et ledit pont inférieur (5) fait partie dudit second profilé plein et lesdits premier et second profilés sont en alliage d'aluminium de la série 2xxx, 6xxx ou 7xxx et ont chacun une limite d'élasticité d'au moins 350 MPa et de préférence d'au moins 400 MPa, ledit profilé creux ayant été cintré avant ou après assemblage.

2. Jante de roue pour cycle selon la revendication 1, dans lequel au moins un desdits profilés pleins a localement une épaisseur inférieure à 2 mm et de préférence inférieure à 1 mm.

3. Jante de roue pour cycle selon la revendication 1 ou la revendication 2, **caractérisée en ce qu'**au moins un desdits profilé plein est en alliage d'aluminium de la série 2xxx, 6xxx ou 7xxx. et préférentiellement est sélectionné dans le groupe constitué des alliages 6082, 6056, 6013, 7108, 7020,7022, 7075, 7349, 7449, 2017, 2014, 2196 et 2195

4. Jante de roue pour cycle selon l'une quelconque des revendications 1 à 3, **caractérisée en ce que** ledit premier profilé plein est en un premier alliage d'aluminium et ledit second profilé plein est en un second alliage d'aluminium différent dudit premier alliage.

5. Jante de roue pour cycle selon la revendication 4, **caractérisée en ce que caractérisé en ce que** ledit premier alliage est sélectionné dans le groupe constitué des alliages 6082, 6056, 6013 , 2017, 2014, 2196 et 2195 et ledit second alliage est sélectionné dans le groupe constitué des alliages 7108, 7020,7022, 7075, 7349, 7449.

6. Jante de roue pour cycle selon l'une quelconque des revendications 1 à 5, **caractérisée en ce que** l'assemblage est effectué par soudage par friction malaxage, soudage laser ou soudage à l'arc

7. Jante de roue pour cycle selon l'une quelconque des revendications 1 à 6 dans laquelle ledit second profilé creux présente une limite d'élasticité supérieure à celle du premier profilé plein.

8. Jante de roue selon l'une quelconque des revendications 1 à 7 dans laquelle un alliage de la famille 7xxx est utilisé pour la réalisation dudit second profilé.

9. Roue de vélo comportant un moyeu, une jante et des rayons tendus entre le moyeu et la jante, **caractérisé en ce que** la roue comporte une jante selon une quelconque des revendications 1 à 8.

10. Procédé de fabrication d'une jante de roue pour cycle selon une quelconque des revendications 1 à 8 dans lequel :
(i) on approvisionne au moins un premier profilé plein (1) en alliage d'aluminium de la série 2xxx, 6xxx ou 7xxx et au moins un second profilé plein (2) en alliage d'aluminium de la série 2xxx, 6xxx ou 7xxx, lesdits premier et second profilés étant obtenus par filage, et ayant chacun une limite d'élasticité d'au moins 350 MPa et de préférence d'au moins 400 MPa ;
(ii) chaque profilé plein est cintré
(iii) on assemble lesdits profilés plein par soudage de manière à former un profilé creux.

## Patentansprüche

1. Radfelge für ein Fahrrad umfassend ein Hohlprofil, welches im Querschnitt zwei seitliche Schenkel (3, 4) aufweist, die die beiden Seitenflanken des Profils bilden und an ihrer Basis durch einen unteren Steg (5) und in ihrem mittleren Bereich durch einen oberen Steg (6) so verbunden sind, dass zum Scheitel der Schenkel hin eine Nut gebildet wird, **dadurch gekennzeichnet, dass** das Hohlprofil durch Zusammenfügen mindestens eines ersten Vollprofils (1) aus Aluminiumlegierung mit mindestens einem zweiten Vollprofil (2) aus Aluminiumlegierung gebildet ist, das Zusammenfügen durch Schweißen erfolgt, das erste und zweite Profil durch Strangpressen hergestellt sind, der obere Steg (6) Teil des ersten Vollprofils ist und der untere Steg (5) Teil des zweiten Vollprofils ist und das erste und zweite Profil aus einer Aluminiumlegierung der Serie 2xxx, 6xxx oder 7xxx gefertigt sind und jeweils eine Elastizitätsgrenze von mindestens 350 MPa und vorzugsweise mindestens 400 MPa haben, wobei das Hohlprofil vor oder nach dem Zusammenfügen gebogen wurde.

2. Radfelge für ein Fahrrad nach Anspruch 1, bei der mindestens eins der Vollprofile örtlich eine Dicke von weniger als 2 mm und vorzugsweise weniger als 1 mm hat.

3. Radfelge für ein Fahrrad nach Anspruch 1 oder Anspruch 2, **dadurch gekennzeichnet, dass** mindestens eins der Vollprofile aus einer Aluminiumlegierung der Serie 2xxx, 6xxx oder 7xxx gefertigt ist und vorzugsweise ausgewählt ist aus der Gruppe bestehend aus den Legierungen 6082, 6056, 6013, 7108, 7020, 7022, 7075, 7349, 7449, 2017, 2014, 2196 und 2195.

4. Radfelge für ein Fahrrad nach irgendeinem der Ansprüche 1 bis 3, **dadurch gekennzeichnet, dass** das erste Vollprofil aus einer ersten Aluminiumlegierung und das zweite Vollprofil aus einer zweiten, von der ersten verschiedenen Aluminiumlegierung gefertigt ist.

5. Radfelge für ein Fahrrad nach Anspruch 4, **dadurch gekennzeichnet, dass** die erste Legierung aus der Gruppe bestehend aus den Legierungen 6082, 6056, 6013, 2017, 2014, 2196 und 2195 und die zweite Legierung aus der Gruppe bestehend aus den Legierungen 7108, 7020, 7022, 7075, 7349, 7449 ausgewählt ist.

6. Radfelge für ein Fahrrad nach irgendeinem der Ansprüche 1 bis 5, bei der das Zusammenfügen durch Reibrührschweißen, Laserstrahlschweißen oder Lichtbogenschweißen erfolgt.

7. Radfelge für ein Fahrrad nach irgendeinem der Ansprüche 1 bis 6, bei der das zweite Vollprofil eine Elastizitätsgrenze aufweist, die höher ist als die des ersten Vollprofils.

8. Radfelge nach irgendeinem der Ansprüche 1 bis 7, bei der für die Herstellung des zweiten Profils eine Legierung der Familie 7xxx eingesetzt wird.

9. Fahrrad-Rad aufweisend eine Nabe, eine Felge und zwischen Nabe und Felge gespannte Speichen, **dadurch gekennzeichnet, dass** das Rad eine Felge nach irgendeinem der Ansprüche 1 bis 8 aufweist.

10. Verfahren zur Herstellung einer Radfelge für ein Fahrrad nach irgendeinem der Ansprüche 1 bis 8, bei dem:
(i) mindestens ein erstes Vollprofil (1) aus einer Aluminiumlegierung der Serie 2xxx, 6xxx oder 7xxx und mindestens ein zweites Vollprofil (2) aus einer Aluminiumlegierung der Serie 2xxx, 6xxx oder 7xxx bereitgestellt werden, wobei das erste und zweite Profil durch Strangpressen hergestellt werden und jeweils eine Elastizitätsgrenze von mindestens 350 MPa und vorzugsweise mindestens 400 MPa haben;
(ii) jedes Vollprofil gebogen wird,
(iii) die Vollprofile durch Schweißen so zusammengefügt werden, dass ein Hohlprofil gebildet wird.

## Claims

1. Wheel rim for a bicycle comprising a hollow profile having in its cross-profile two side wings (3, 4) forming the two lateral sides of said profile, joined at their base by a lower bridge (5) and in their median part by an upper bridge (6) so as to produce towards the top of the wings a groove, **characterized in that** said hollow profile is formed by assembling at least one first full profile (1) made of aluminum alloy with at least one second full profile (2) made of aluminum alloy, the assembly being made by welding, said first and second profiles being obtained by extrusion, said upper bridge (6) belongs to said first part of said first full profile and said lower bridge (5) belongs to said second full profile and said first and second profiles are made of aluminum alloy of series 2xxx, 6xxx or 7xxx and each have a yield strength of at least 350 MPa and preferably at least 400 MPa said hollow profile having been bent before or after assembly.

2. Wheel rim according to claim 1 wherein at least one of said full profiles is locally less than 2 mm thick and preferably less than 1 mm thick.

3. Wheel rim according to claim 1 or claim 2 wherein said full profiles are made from aluminum alloy selected from the group consisting of alloys 6082, 6056, 6013, 7108, 7020, 7022, 7075, 7349, 7449, 2017, 2014, 2196 and 2195.

4. Wheel rim according to any one of claims 1 to 3 **characterized in that** said first full profile is made of a first aluminum alloy and said second full profile is made of a second aluminum alloy different from said first alloy.

5. Wheel rim according to claim 4 **characterized in that** said first alloy is selected from the group consisting of alloys 6082, 6056, 6013, 2017, 2014, 2196 and 2195, and said second alloy is selected from the group consisting of alloys 7108, 7020, 7022, 7075, 7349, 7449.

6. Wheel rim according to any one of claims 1 to 5 wherein assembly is made by friction stir welding, laser welding or arc welding.

7. Wheel rim for a bicycle according to any one of claims 1 to 6 wherein said second full profile has a yield stress greater than that of the first full profile.

8. Wheel rim according to any one of claims 1 to 7 wherein an alloy of the 7xxx family is used to produce said second profile.

9. Bicycle wheel comprising a hub, a rim and spokes tensioned between the hub and the rim, **characterized in that** the wheel comprises a rim according to any one of claims 1 to 8.

10. Manufacturing process of a wheel rim for bicycle for according to any of claims 1 to 8 in which:
(i) at least one first full profile (1) made of aluminum alloy of series 2xxx, 6xxx or 7xxx and at least one second full profile (2) made of aluminum alloy of series 2xxx, 6xxx or 7xxx, are procured, said first and second profiles being obtained by extrusion, and each having a yield stress of at least 350 MPa and preferably at least 400 MPa;
(ii) each profile is bent
(iii) said full profiles are assembled by welding so as to form a hollow profile.
